# EUROPÄISCHE PATENTSCHRIFT

(11) **EP 2 116 364 B1**
(45) Veröffentlichungstag und Bekanntmachung des Hinweises auf die Patenterteilung: **06.08.2014**
(21) Anmeldenummer: 09002757.4
(22) Anmeldetag: 26.02.2009
(51) Int. Cl.: B31D 5/00, B31B 25/00, B31D 1/00, B31F 1/07, B31F 5/02, A47J 31/08

(54) **Verfahren und Vorrichtung zur Herstellung von Filtereinsätzen**
Method and device for producing filter inserts
Procédé et dispositif destinés à la fabrication d'installations de filtres

(30) Priorität: 26.02.2008 DE 202008002654 U
(43) Veröffentlichungstag der Anmeldung: 11.11.2009
(73) Patentinhaber: GFM Maschinenbau GmbH, 45739 Oer-Erkenschwick (DE)
(72) Erfinder: Gawarecki, Herbert, 45721 Haltern am See (DE)
(74) Vertreter: Gesthuysen Patent- und Rechtsanwälte

(56) Entgegenhaltungen:
- EP-A1- 1 172 054
- BE-A- 710 532
- DE-A1- 3 113 951
- DE-U1- 8 021 424

## Beschreibung

Die Erfindung betrifft ein Verfahren und eine Vorrichtung zur Herstellung von Filtereinsätzen, insbesondere Filtereinsätze zur Zubereitung eines Kaffee- oder Teefiltrats, umfassend das kontinuierliche Falzen einer Filterpapierbahn zu einer Doppellage, das partielle Verbinden der Doppellage zu einer Vielzahl von zusammenhängenden Filtereinsätzen durch mindestens eine Prägenaht und das Trennen der zusammenhängenden Filtereinsätze aus der Filterpapierbahn. Die Vorrichtung ist zur Durchführung des Verfahrens geeignet und umfasst eine Falzvorrichtung, ein Prägewalzenpaar und ein Schneidewalzenpaar.

Im Stand der Technik ist eine Vielzahl von Verfahren und Vorrichtungen zur Herstellung von Filtereinsätzen, insbesondere von Kaffee- und Teefiltern bekann.

Die EP 1 172 054 A1 offenbart beispielsweise ein Verfahren zur Herstellung von tütenartigen Filterpapiereinsätzen, bei dem ein entsprechender Bogen zur Herstellung eines Filterpapiereinsatzes nahezu abfallfrei aus einer Filterpapierbahn herausgeschnitten wird.

Die DE 80 21 424 U1 offenbart eine Kaffeefiltertüte aus Filterpapier, in die eine Füllstandsmarkierung eingeprägt ist, ferner werden Verfahrensschritte zur Herstellung einer Filtertüte offenbart, nämlich dass die Verbindung der Seitenkanten und die Kennzeichnung in einem Arbeitsgang und mit einem Werkzeug vorgenommen werden können.

Die DE 31 13 951 A1 offenbart ein Verfahren zur Herstellung von trichterförmigen Filtereinsätzen mit einer Öffnungshilfe, sowie eine Vorrichtung zur Durchführung dieses Verfahrens. Das Verfahren beinhaltet das getrennte und gemeinsame Verarbeiten von zwei zumindest teilweise kongruent geführten Filtermaterialbahnen, die abschließend zusammengeführt und gemeinsam geschnitten werden.

Die Verfahrensabfolge ist dabei üblicherweise so vorgesehen, dass eine Filterpapierbahn zunächst zu einer Doppellage gefalzt wird und diese Doppellage anschließend partiell mit Prägenähten versehen wird, wobei die Prägenähte zumindest teilweise die Außenkontur der Filtereinsätze definieren. Anschließend werden die verprägten Filtereinsätze aus der Filterpapierbahn herausgetrennt und weiterverarbeitet. Falls auf dem Filtereinsatz ein Symbol oder beispielsweise eine Füllstandsanzeige vorgesehen ist, erfolgt das Einprägen des Symbols oder der Füllstandsanzeige vor dem Falten der Filterpapierbahn in der einlagigen Filterpapierbahn. Diese verfahrenstechnische Anordnung, also die Prägung einer Kennzeichnung vor dem Falzen vorzusehen, hat den Nachteil, dass viel Bauraum für die Anordnung der Prägeeinrichtung benötigt wird. Die eingeprägte Kennzeichnung ist zudem bei dieser Anordnung nur auf einer Seite des Filtereinsatzes zu erkennen, so dass dieser zum Ablesen immer richtig positioniert sein muss. Des Weiteren hat diese Anordnung den Nachteil, dass eine Prägung meist eine lokale Schwächung des Materials hervorruft, wodurch das Material beispielsweise bei der weiteren Verarbeitung lokal beschädigt werden kann und der Produktionsprozess infolgedessen gestoppt wird.

Der vorliegenden Erfindung liegt daher die Aufgabe zugrunde, ein Verfahren und eine Vorrichtung zur Herstellung von Filtereinsätzen anzugeben, bei dienen die aus dem Stand der Technik bekannten Probleme - zumindest teilweise - vermieden werden und eine Beschädigung der Filterpapierbahn zuverlässig verhindert wird.

Die vorgenannte Aufgabe wird erfindungsgemäß bei einem Verfahren der eingangs genannten Art gelöst, dass die Filtereinsätze nach dem Falzen mit einer Kennzeichnung versehen werden, dass die Kennzeichnung in den Filtereinsatz eingeprägt wird, und dass die Prägung der Kennzeichnung durch Matrize/Patrize-Prägung, nämlich durch eine Patrize und eine elastische Gegenplatte erzeugt ist. Diese Kennzeichnung der Filtereinsätze beispielsweise mit einem Symbol oder einer Füllstandsanzeige nach dem Falzen hat den Vorteil, dass die Kennzeichnung ohne weitere Einschränkung auf beide Seiten des Filtereinsatzes aufgebracht werden kann, da die Filterpapierbahn nach dem Falzen bereits doppellagig vorliegt und so einfach in einem einzigen Verfahrenschritt von beiden Seiten behandelt, also gekennzeichnet werden kann. Da die Filterpapierbahn doppellagig vorliegt, wird sie zudem durch die Fördereinrichtungen weniger stark beansprucht und kann nicht so leicht beschädigt werden. Des Weiteren führt diese Anordnung zur Reduzierung des benötigten Bauraums, da alle Einrichtunggen zur Be- und Verarbeitung der doppellagigen Filterpapierbahn kompakt aneinander vorgesehen werden können.

Das Einprägen der Kennzeichnung unmittelbar in das Material der Filtereinsätze hat den Vorteil, dass bezüglich der Kennzeichnung vergleichsweise wenige Hygienevorschriften beachtet werden müssen, da keine Zusatzstoffe, z. B. Farbstoffe, eingebracht werden. Die Kennzeichnung besteht dabei bevorzugt aus einem Schriftzeichen und/oder einem Symbol, beispielsweise einem Firmenlogo.

Der Bauraum für die Be- und Verarbeitungseinrichtung reduziert sich zusätzlich dadurch, dass lediglich eine Filterpapierbahn mit der halben Breite - die Doppellage - verarbeitet werden muss, da die Filterpapierbahn bereits durch die Falzung zusammengelegt ist. Speziell muss in einer Einrichtung zum Aufbringen der Kennzeichnung nur noch eine Filterpapierbahn mit der halben Breite verarbeitet werden, wodurch die Einrichtung eine geringere Baugröße aufweist.

Das Verfahren sieht vor, dass die Prägung der Kennzeichnung durch einen Prägevorgang stattfindet, bei dem eine Matrize und eine Patrize zusammenwirken. Damit die beiden Filterpapierlagen durch das Prägen der Kennzeichnung nicht miteinander verbunden werden, hat es sich als vorteilhaft herausgestellt, wenn die Prägung der Kennzeichnung durch eine Patrize und eine elastische Gegenplatte erzeugt wird, da durch diese Ausgestaltung der Prägeseinrichtung für die Kennzeichnung ein Zusammenprägen, d. h. ein Verbinden der beiden Filterpapierlagen zuverlässig verhindert wird, da die elastische Gegenplatte ein nur unzureichendes Widerlager für eine verbindende Prägung bildet. Dabei ist vorzugsweise vorgesehen, dass die elastische Gegenplatte aus Silikon-Gummi, aus Natur-Gummi oder beispielsweise aus Holz besteht, so dass jedenfalls ein elastisches Widerlager beim Prägevorgang gewährleistet ist.

Eine bevorzugte Ausgestaltung des Verfahrens sieht vor, dass die Kennzeichnung der Filtereinsätze gleichzeitig mit deren Trennung aus der Filterpapierbahn erfolgt. Das hat den Vorteil, dass zwei Verfahrensschritte zusammengelegt werden und der Prozess dadurch vereinfacht wird. Alternativ wird die Kennzeichnung vor der Trennung der Filtereinsätze vorgenommen. Beide Ausgestaltungen haben den Vorteil, dass die einzelnen Filterpapiereinsätze bei der Be- bzw. Verarbeitung besser geführt werden können, da sie durch die Filterpapierbahn miteinander verbunden sind. Es ist zudem denkbar, dass die Kennzeichnung der Filtereinsätze, beispielsweise mit einem Symbol oder einer Füllstandsanzeige, erst nach dem Trennen aus der Filterpapierbahn erfolgt, so dass jeder Filtereinsatz, beispielsweise in einem diskontinuierlichen Arbeitsschritt, einzeln mit einer Kennzeichnung versehen wird.

Das Verfahren zeichnet sich in einer bevorzugten Ausgestaltung dadurch aus, dass als Kennzeichnung beispielsweise ein Symbol oder eine Füllstandsanzeige unmittelbar in das Material der Filtereinsätze eingeprägt wird. Als vorteilhaft hat es sich herausgestellt, eine Kennzeichnung in Form einer Füllstandsmarkierung an den Filtereinsätzen vorzusehen, so dass der Benutzer bei der Verwendung eine Füllvorgabe zur Orientierung hat. Bei einer geprägten Kennzeichnung ergibt sich zudem ein weiter Vorteil der erfindungsgemäßen Verfahrensanordnung - die Anordnung der Kennzeichnung nach dem Falzen -, nämlich dass die eingeprägte Kennzeichnung nicht durch den Falzvorgang beschädigt oder in ihrer Kontur geschwächt wird, da der Falzvorgang bereits abgeschlossen ist.

Gemäß einer weiteren vorteilhaften Ausgestaltung des erfindungsgemäßen Verfahrens ist es vorgesehen, dass die Prägung der Kennzeichnung beide Lagen der Doppellage erfasst, so dass die Kennzeichnung von beiden Seiten des Filtereinsatzes erkennbar ist. Dabei ist es besonders bevorzugt, dass die geprägte Kennzeichnung, beispielsweise ein Firmenlogo, zumindest teilweise sowohl seitenrichtig als auch spiegelverkehrt eingeprägt wird. Dadurch ergibt sich der Vorteil, dass das Firmenlogo auf jeder Seite der Filterwand bzw. der Filterwände seitenrichtig angeordnet ist und gelesen bzw. erkannt werden kann.

Als besonders vorteilhafte Ausgestaltung des Verfahrensablaufs hat es sich herausgestellt, die Filterpapierbahn zunächst kontinuierlich zu einer Doppellage zu falzen. Dabei ist die Falz im Wesentlichen in der Mitte der Querbreite der Filterpapierbahn vorgesehen, so dass sich eine exakte Überdeckung der beiden Filterpapierbahnhälften beim Übereinanderfalzen ergibt. Die so entstandene Doppellage wird nachfolgend durch einen Prägevorgang mit wenigstens einer Prägenaht pro Filtereinsatz zu einer Vielzahl von zusammenhängenden Filtereinsätzen verbunden. Die einzelnen Lagen der Doppellage aus der Filterpapierbahn werden dabei partiell formschlüssig und fest miteinander verbunden, wodurch bereits im Wesentlichen die Kontur der Filtereinsätze definiert ist. Anschließend wird jeder einzelne Filtereinsatz - der jedoch noch mit der Filterpapierbahn verbunden ist - mit einer geprägten Kennzeichnung versehen, die sich über beide Lagen des Filtereinsatzes erstreckt, jedoch die Doppellage nicht verbindet. Die Kennzeichnung, also beispielsweise Linien für eine Füllstandsanzeige, sind so von beiden Seiten des Filtereinsatzes erkennbar. Abschließend werden die einzelnen Filtereinsätze aus der Filterpapierbahn herausgetrennt und z. B. übereinandergestapelt und verpackt. Das Heraustrennen aus der Filterpapierbahn kann durch Schneiden, Stanzen oder durch einen anderen Trennvorgang erfolgen.

Eine weitere vorteilhafte Ausgestaltung des Verfahrensablaufs sieht vor, dass die Filterpapierbahn zunächst kontinuierlich zu einer Doppellage gefalzt wird und die so entstandene Doppellage nachfolgend durch Prägen mit einer nichtverbindenden Kennzeichnung versehen wird. Der Ausdruck "nichtverbindend" meint, dass obwohl sich die Prägung über beide Lagen der Doppellage erstreckt, keine Verbindung der beiden Filterpapierlagen erfolgt. Nach dem Kennzeichnen wird die Doppellage mit wenigstens einer verbindenden Prägenaht partiell verbunden, so dass eine Vielzahl von zusammenhängenden Filtereinsätzen entsteht. Diese Filtereinsätze werden nachfolgend von einer Schneidewalze aus der Filterpapierbahn bzw. der Doppellage herausgetrennt und weiterverarbeitet. Der Unterschied zur vorhergehenden Verfahrensreihenfolge besteht darin, dass das Prägen der - nichtverbindenden - Kennzeichnung vor dem Prägen der die Doppellage partiell verbindenden Prägenähte erfolgt.

Sowohl die Prägung der Nähte als auch die Prägung der Kennzeichnung erfolgt nach einer weiteren bevorzugten Ausgestaltung des Verfahrens jeweils mittels einer Prägewalze, die sich beispielsweise auf einem beweglichen oder unbeweglichen Untergrund abdrückt. Der Untergrund ist dabei derart ausgestaltet, dass eine nichtverbindende Prägung für die Kennzeichnung und eine verbindende Prägung für die Prägenähte herstellbar ist. Als sehr vorteilhaft hat es sich herausgestellt, sowohl für die Prägung der Nähte als auch für die Prägung der Kennzeichnung jeweils ein Prägewalzenpaar vorzusehen, da durch das kontinuierliche Bewegen beider Walzen ein unterbrechungsfreier Prägevorgang entlang der gesamten Filterpapierbahn möglich ist.

Zur weiteren Reduzierung des benötigten Bauraums und zur Vereinfachung des Verfahrens insgesamt, ist es besonders bevorzugt, das Prägen der Prägenaht, also das Verbinden der beiden Filterlagen und das Prägen der Kennzeichnung in einem einzigen Verfahrensschritt zu vollziehen. Für diesen Verfahrensschritt ist lediglich eine Prägewalze und eine entsprechende Gegenplatte vorgesehen, wobei sowohl die Prägenähte als formschlüssige Verbindung zwischen den beiden Filterlagen geprägt wird als auch die Kennzeichnung vorgenommen wird, ohne die Filterpapierlagen durch die Kennzeichnung zu verbinden. Die Zusammenfassung von zwei Verfahrensschritten zu einem Verfahrensschritt führt zu einer wesentlichen Reduzierung des Arbeitsaufwandes. Als besonders vorteilhaft hat es sich herausgestellt, für diesen Verfahrenschritt ein einziges Prägewalzenpaar vorzusehen, das sowohl die verbindende Prägung der Prägenähte als auch die nichtverbindende Prägung der Kennzeichnung in einem Verfahrenschritt vornimmt.

Das erfindungsgemäße Verfahren zeichnet sich in einer besonders bevorzugten Variante dadurch aus, dass das Trennen der einzelnen Filtereinsätze aus der Filterpapierbahn mit einer Schneidewalze erfolgt, die die einzelnen Filtereinsätze kontinuierlich aus der Filterpapierbahn heraustrennt. Der anfallende Abfallrest wird aus dem Prozess abgezogen. Als sehr vorteilhaft hat es sich herausgestellt, für den Trennvorgang ein Schneidewalzenpaar vorzusehen, insbesondere wobei auf einer ersten Schneidewalze beispielsweise Nuten vorgesehen sind, in die beispielsweise die Schneidmesser der zweiten Schneidewalze eingreifen und dabei die Filterpapierlagen durchtrennen. Ferner ist vorzugsweise alternativ vorgesehen, dass die erste Schneidewalze unprofiliert ist

Das Herstellen von Filtereinsätzen aus einer Filterpapierbahn ist häufig ein kontinuierlicher Prozess, weshalb auch das Falzen der Filterpapierbahn zu einer Doppellage als kontinuierlicher Prozess ausgebildet sein sollte. Als besonders vorteilhaft hat es sich herausgestellt, den Falzprozess durch ein Führen der Filterpapierbahn über ein Falzdreieck zu realisieren, wodurch es möglich ist, die Filterpapierbahn gleichmäßig und kontinuierlich - im Wesentlichen entlang ihrer längserstreckten Mittellinie - zu falzen. Das Falzdreieck bzw. der Falzbereich ist dabei entsprechend so lang ausgestaltet, dass eine Beschädigung der Filterpapierbahn durch den Falzvorgang zuverlässig vermieden wird. Die Seiten der Filterpapierbahn werden bei dem Falzvorgang jeweils um 90° gedreht. Damit dieses Drehen nicht zu einem Reißen der Filterpapierbahn führt, muss die Winkeländerung langsam über eine entsprechend lange Strecke vorgesehen werden.

Nach dem Falzen ist die Filterpapierbahn derart gefalzt, dass eine Doppellage entstanden ist. Diese Doppellage wird nach dem Falzvorgang vorzugsweise von mindestens einer Raffrolle derart geführt, dass ein Faltenwurf innerhalb der Filterpapierbahn verhindert wird. Alternativ zur Raffrolle ist vorzugsweise auch eine Raffstange vorgesehen, die eine entsprechende Führung der Doppellage gewährleistet. Besonders bevorzugt ist es, die Raffrolle bzw. die Raffstange paarweise vorzusehen, so dass die Filterpapierbahn zwischen den beiden Raffrollen bzw. Raffstangen hindurchgeführt wird und eine gleichmäßige Beanspruchung gewährleistet ist. Bevorzugt wird die Doppellage, nach der Führung durch die Raffrollen bzw. Raffstangen, mittels einer Umlenkrolle um im Wesentlichen 90° umgelenkt, so dass der weitere Bearbeitungsprozess der Filterpapierbahn insbesondere in einer horizontalen Anordnung stattfindet.

Eine letzte besonders bevorzugte Ausgestaltung des erfindungsgemäßen Verfahrens sieht vor, dass die Matrize und die Patrize in Form einer Walze realisiert sind. Dadurch wird gewährleistet, dass auch die Prägung der Kennzeichnung in einem kontinuierlichen Prozess erfolgen kann. Dabei ist insbesondere vorgesehen, dass die Matrizenwalze im Oberflächenbereich aus einem elastischen Material besteht, wobei dafür insbesondere Silikon-Gummi oder Natur-Gummi oder aber auch Holz vorgesehen ist. Bei dem Prägevorgang für die Kennzeichnung drückt nun die Patrizenwalze ihre Oberflächenstruktur bzw. der Patrizenstempel gegen die mit einer elastischen Oberfläche ausgestattete Matrizenwalze ab und erzeugt dabei eine kennzeichnende, aber nicht verbindende Prägung der beiden Filterpapierlagen.

Als sehr vorteilhaft hat es sich herausgestellt, dass der elastische Bereich der Matrizenwalze sich nur über einen definierten Teilbereich der Oberfläche der Matrizenwalze erstreckt, so dass der Restbereich beispielsweise für eine Verprägung, d. h. eine verbindende Prägung vorgesehen werden kann. Diese Ausgestaltung ermöglicht insbesondere das Vornehmen einer verbindenden Prägung und einer nicht verbindenden, also nur kennzeichnenden Prägung in einem Arbeitsschritt, mit einem Prägewalzenpaar. Eine bevorzugte Ausgestaltung sieht vor, dass nur die Matrize oder nur die Patrize in Form einer Walze realisiert ist und sich jeweils auf einem zwar beweglich, aber flächig ausgestalteten Gegenbereich abdrückt bzw. sich dieser Gegenbereich auf der Walze abdrückt, dabei kann entweder die Oberfläche der Walze elastisch und die Gegenplatte Patrizenstempel aufweisen oder umgekehrt.

Zur Durchführung des erfindungsgemäßen Verfahrens eignet sich in besonderem Maße eine Vorrichtung, die zum Herstellen von Filtereinsätzen aus einer Filterpapierbahn dient und eine Falzvorrichtung zum Falzen der Filterpapierbahn zu einer Doppellage, eine erste Prägevorrichtung zum partiellen Verbinden der Doppellage, eine zweite Prägevorrichtung zum Kennzeichnen der Filtereinsätze und eine Schneidevorrichtung zum Trennen der Filtereinsätze aus der Doppellage aufweist. Die Vorrichtung ist so aufgebaut, dass als erste Einrichtung, die die Filterpapierbahn verarbeitet, eine Falzvorrichtung vorgesehen ist, mit der die Filterpapierbahn etwa auf der Hälfte ihrer Breite zu einer Doppellage falzbar ist. Nach der Falzvorrichtung ist eine erste Prägevorrichtung - erstes Prägewalzenpaar - angeordnet, die derart ausgestaltet ist, dass damit die beiden Lagen der Doppellage durch eine feste Prägenaht miteinander verbindbar sind. Die Prägenaht definiert im Wesentlichen die Außenkontur der herzustellenden Filtereinsätze. Nach dem Prägewalzenpaar zum Verbinden ist eine zweite Prägevorrichtung -zweites Prägewalzenpaar - angeordnet, mit der die Filtereinsätze durch eine Prägung kennzeichenbar sind, wobei die Prägewalzen des zweiten Prägewalzenpaares so ausgestaltet sind, dass durch die Prägung der Kennzeichnung keine Verbindung zwischen den beiden Lagen der Doppellage entsteht. Als letzte Einrichtung der Vorrichtung ist eine Schneidevorrichtung - Schneidewalzenpaar - angeordnet, mit der die von der Vorrichtung verbundenen und gekennzeichneten Filtereinsätze aus der Doppellage bzw. der Filterpapierbahn heraustrennbar sind.

Eine erfindungsgemäße Vorrichtung zum Herstellen von Filtereinsätzen bzw. zur Durchführung des erfindungsgemäßen Verfahrens ist derart ausgestaltet, dass sie eine Falzvorrichtung, ein einziges Prägewalzenpaar und ein Schneidewalzenpaar aufweist, wobei das Prägewalzenpaar derart ausgestaltet ist, dass in einem einzigen Verfahrensschritt mit dem Prägewalzenpaar eine verbindende Prägenaht und eine unverbindende Kennzeichnung prägbar ist. Diese erfindungsgemäße Vorrichtung hat den Vorteil, dass lediglich ein Prägewalzenpaar benötigt wird, um die Filtereinsätze zu verbinden und zu kennzeichnen, wodurch eine Reduzierung des benötigten Bauraums erreicht wird.

Bei einer Vorrichtung, mit einer Falzvorrichtung, einem Prägewalzenpaar und einem Schneidewalzenpaar ist vorgesehen, dass die Vorrichtung derart gestaltet ist, dass das Schneidewalzenpaar gleichzeitig mit dem Trennvorgang eine unverbindende, geprägte Kennzeichnung der Filtereinsätze realisiert. Dazu sind auf der Schneidewalze nicht nur z. B. Schneidemesser, sondern zusätzlich Erhebungen für die Prägung der Kennzeichnung vorgesehen und auf der Gegenwalze eine korrespondierende Ausnehmung.

Neben dem Verfahren und der Vorrichtung umfasst die Erfindung zusätzlich eine Matrizenwalze, die sich dadurch auszeichnet, dass sie einen elastischen Oberflächenbereich zum Prägen der Kennzeichnung und einen starren Oberflächenbereich zum Prägen von Prägenähten aufweist. Der elastische Oberflächenbereich zum Prägen von Kennzeichnungen ist dafür notwendig, dass die prägende Patrize mit dem elastischen Oberflächenbereich zusammenwirkt und so die zwischen Patrize und elastischem Oberflächenbereich eingebrachte Filterpapierbahn zwar mit einer kennzeichnenden Prägung versehen, jedoch nicht verbunden wird. Der starre Oberflächenbereich in der Matrizenwalze mit entsprechenden Erhebungen und/oder Rücksprüngen zum Prägen von Prägenähten ist dafür vorgesehen, dass die Erhebungen und/oder Rücksprünge mit Erhebungen und/oder Rücksprüngen auf der Patrizenwalze derart korrespondieren, dass feste Prägenähte entstehen und die beiden Lagen der Doppellage - zumindest partiell - miteinander verbunden werden. Das Zusammenspiel von Patrizenstempel und elastischem Gegenbereich führt also zu einer nichtverbindenden Prägung, während das Zusammenspiel von zwei im Wesentlichen nicht elastischen Oberflächenbereichen mit Erhebungen und/oder Rücksprüngen zu einer verbindenden Prägung führt.

Im einzelnen gibt es nun eine Vielzahl von Möglichkeiten das erfindungsgemäße Verfahren und die erfindungsgemäße Vorrichtung auszugestalten und weiterzubilden. Dazu wird verwiesen einerseits auf die dem Patentanspruch 1 nachgeordneten Patentansprüche, andererseits auf die folgende Beschreibung von Ausfürungsbeispielen in Verbindung mit der Zeichnung. In der Zeichnung zeigen
- Fig. 1: eine Vorrichtung zur Durchführung des erfindungsgemäßen Verfahrens in einer Rückansicht,
- Fig. 2: die Vorrichtung gemäß Fig. 1 zur Durchführung des erfindungsgemäßen Verfahrens in der Hauptansicht,
- Fig. 3: die Vorrichtung gemäß den Fig. 1 und 2 zur Durchführung des erfindungsgemäßen Verfahrens in einer Seitenansicht,
- Fig. 4: einen Ausschnitt einer Abwicklung einer Matrizenrolle zur Durchführung einer bevorzugten Ausgestaltung des erfindungsgemäßen Verfahrens und
- Fig. 5: einen Ausschnitt einer Abwicklung einer Patrizenrolle zur Durchführung einer bevorzugten Ausgestaltung des erfindungsgemäßen Verfahrens.

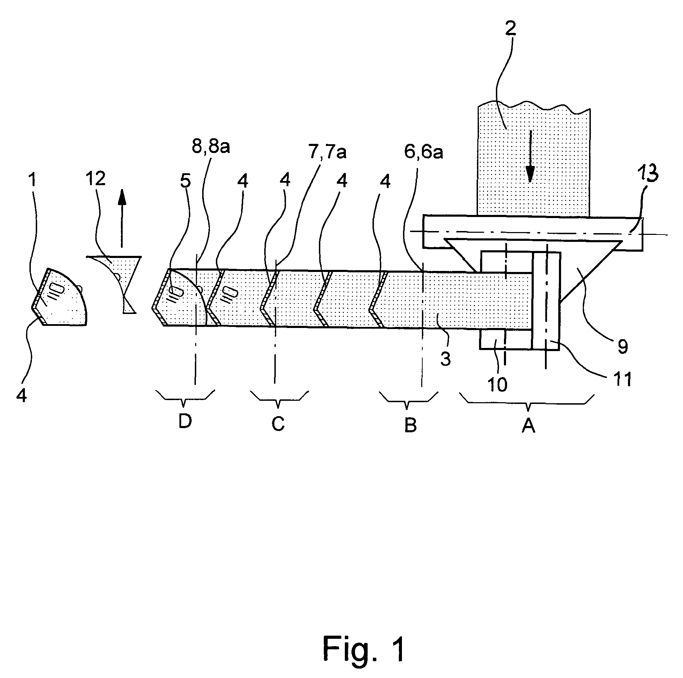

In Fig. 1 ist eine Vorrichtung dargestellt, mit der das erfindungsgemäße Verfahren durchführbar ist. Das erfmdungsgemäße Verfahren zur Herstellung von Filtereinsätzen 1 umfasst die Verfahrensschritte, kontinuierliches Falzen A einer Filterpapierbahn 2 zu einer Doppellage 3, partielles Verbinden B der Doppellage 3 zu einer Vielzahl von zusammenhängenden Filtereinsätzen 1 durch mindestens eine Prägenaht 4, Kennzeichnen C der Filtereinsätze 1 mit einer Kennzeichnung 5 und Trennen D der Filtereinsätze 1 aus der Filterpapierbahn 2 bzw. der Filtereinsätze 1 aus der Doppellage 3. Die in Fig. 1 dargestellte Vorrichtung weist eine erste Prägewalze 6 zum Verbinden B der Doppellage 3 mit einer Prägenaht 4, eine zweite Prägewalze 7 zum Kennzeichnen C mit einer Kennzeichnung 5, eine Schneidewalze 8, ein Falzdreieck 9, eine Umlenkrolle 10 und eine Raffrolle 11 auf. Die erste Prägewalze 6 für die Prägenähte 4, die zweite Prägewalze 7 für die Kennzeichnung 5, die Schneidewalze 8 und die Raffrolle 11 sind jeweils paarweise vorhanden, so dass sich jeweils ein erstes Prägewalzenpaar 6a, ein zweites Prägewalzenpaar 7a, ein Schneidewalzenpaar 8a und ein Raffrollenpaar 11a ergibt. Die erste Prägewalze 6 für die Prägenähte 4, die zweite Prägewalze 7 für die Kennzeichnung 5 und die Schneidwalze 8 sind in Fig. 1 nur als Mittellinie der entsprechenden Walze dargestellt.

Bei der Vorrichtung gemäß Fig. 1 zur bevorzugten Durchführung des Verfahrens wird die Filterpapierbahn 2 von unten nach oben über das Falzdreieck 9 geführt, wodurch das Falzen A der Filterpapierbahn 2 zu einer Doppellage 3 erfolgt. Die Filterpapierbahn 2 wird dabei etwa auf der Hälfte ihrer Breite gefalzt, so dass die Doppellage 3 etwa die Hälfte der Breite der Filterpapierbahn 2 aufweist. Nach dem Falzen A durch das Falzdreieck 9 wird die entstandene Doppellage 3 oberhalb des Falzdreiecks 9 von einem Raffrollenpaar 11a, bestehend aus zwei Raffrollen 11, geführt. Die Führung durch das Raffrollenpaar 11a verhindert eine Beschädigung der Filterpapierbahn 1 bzw. der Doppellage 3. Nachfolgend wird die Doppellage 3 von einer Umlenkrolle 10 auf um etwa 90° aus einer vertikalen Bewegung in eine horizontale Bewegung umgelenkt. Anschließend tritt die Doppellage 3 zwischen das Prägewalzenpaar 6a ein, wo das partielle Verbinden B der Doppellage 3 durch eine Prägenaht 4 erfolgt. Die Prägenaht 4 stellt eine feste Verbindung zwischen den beiden Lagen der Doppellage 3 her und definiert die Außenkanten des Filtereinsatzes 1. Die Doppellage 3 mit den Prägenähten 4 wird nachfolgend zwischen das Prägewalzenpaar 7a geführt, wo das Kennzeichnen C durch eine geprägte Kennzeichnung 5 erfolgt. Die Kennzeichnung 5 wird in beide Lagen der Doppellage 3 eingeprägt, ohne dass eine Verbindung der beiden Lagen erfolgt. Abschließend erfolgt das Trennen D der Filtereinsätze 1 aus der Filterpapierbahn 2 durch ein Schneidewalzenpaar 8a. Nach dem Heraustrennen der Filtereinsätze 1 aus der Filterpapierbahn 2 entsteht eine Vielzahl einzelner Filtereinsätze 1 und eine entsprechende Anzahl an Abfallresten 12. Die Abfallreste 12 werden aus dem Prozess entfernt und ggf. verwertet.

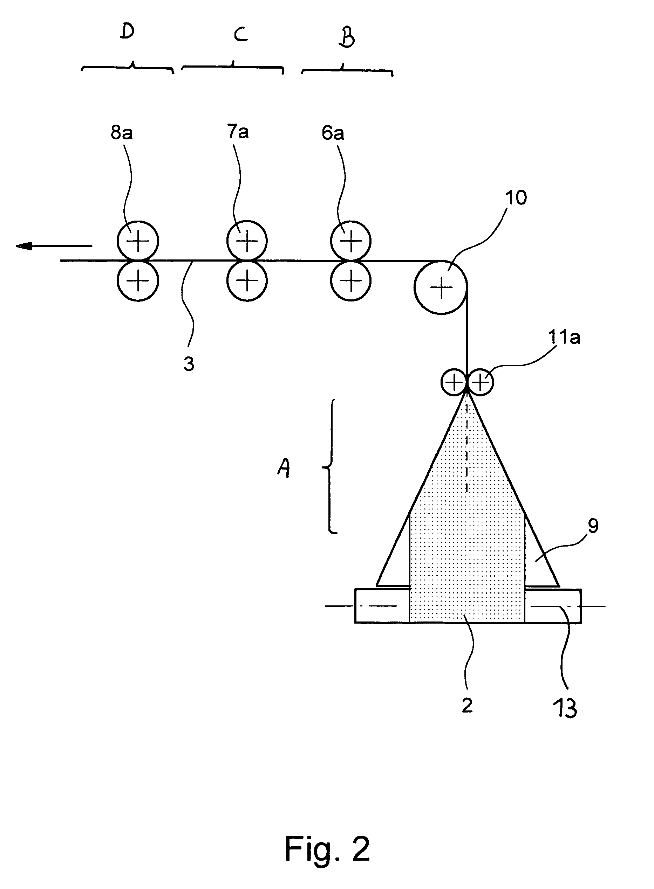

Fig. 2 zeigt die Vorrichtung gemäß Fig. 1 zur Durchführung des erfindungsgemäßen Verfahrens in einer Rückansicht. Die Filterpapierbahn 2 wird von unten nach oben über das Falzdreieck 9 geführt, wodurch das Falzen A der Filterpapierbahn 2 zu einer Doppellage 3 erfolgt. Im oberen Bereich des Falzdreiecks 9 wird die Doppellage 3 von einem Raffrollenpaar 11a aufgenommen und anschließend von einer Umlenkrolle 10 um einen Winkel von etwa 90° umgelenkt, so dass eine horizontale Weiterverarbeitung der Doppellage 3 möglich ist. Anschließend erfolgt das Verbinden B durch das erste Prägewalzenpaar 6a mit einer Prägenaht 4, das Kennzeichnen C der Filtereinsätze mit einer geprägten Kennzeichnung 5 durch das zweite Prägewalzenpaar 7a und das Trennen D der Filtereinsätze aus der Doppellage 3 mit dem Schneidewalzenpaar 8a.

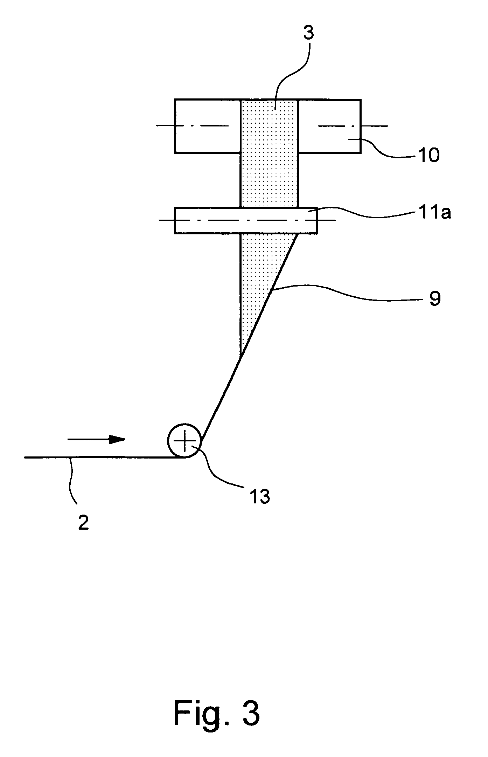

Fig. 3 zeigt die Vorrichtung gemäß Fig. 1 und 2, zur Durchführung des erfindungsgemäßen Verfahrens in einer Seitenansicht. Die horizontal geführte Filterpapierbahn 2, wird bei dieser Ausgestaltung zunächst von einer zweiten Umlenkrolle 13 in eine vertikale Laufrichtung umgelenkt und so von unten nach oben über das Falzdreieck 9 geführt, dass die Filterpapierbahn 2 zu einer Doppellage 3 gefalzt wird. Anschließend wird die Doppellage 3 von einem Raffrollenpaar 11a geführt und von einer Umlenkrolle 10 umgelenkt, so dass eine horizontale Weiterverarbeitung erfolgt.

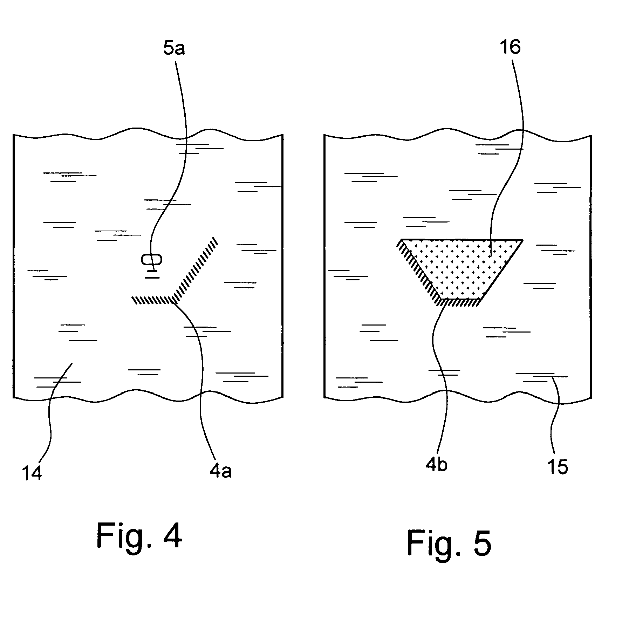

Fig. 4 zeigt einen Ausschnitt einer Abwicklung einer Patrizenwalze 14, die als eine Prägewalze - als Teil eines Prägewalzenpaares 6a, 7a - die Filtereinsätze prägt. Die Oberfläche der dargestellten Patrizenwalze 14 kombiniert die Funktionalität einer ersten Prägewalze 6, mit der die Prägenähte 4 geprägt werden und die Funktionalität einer zweiten Prägewalze 7, mit der die Kennzeichnung 5 geprägt wird, dadurch, dass die Prägenaht 4 und die Kennzeichnung 5 mit einem einzigen Prägewalzenpaar bzw. mit einer einzigen Prägewalze in einem Arbeitsschritt geprägt werden. Die Oberfläche der Patrizenwalze 14 gemäß Fig. 4 weist dafür sowohl Erhebungen 4a zum Prägen der Prägenähte 4 als auch Erhebungen 5a zum Prägen der Kennzeichnung 5 auf.

In Fig. 5 ist ein Ausschnitt einer Abwicklung einer Matrizenwalze 15 dargestellt, die die Ergänzung der Patrizenwalze 14 gemäß Fig. 4 zu einem Prägewalzenpaar darstellt. Die Oberfläche der Matrizenwalze 15 weist dabei Erhebungen und Rücksprünge 4b auf, die mit den Erhebungen 4a der Patrizenwalze 14 korrespondieren, so dass eine verbindende Prägung mit einer festen Prägenaht erfolgt. Weiterhin weist die Oberfläche der Matrizenwalze 15 einen Oberflächenbereich 16 auf, in dem die Oberfläche beispielsweise aus einem Silikon- oder Natur-Gummi besteht. Dieser elastische Oberflächenbereich 16 ermöglicht, dass die Erhebungen 5a der Patrizenwalze 14 eine Kennzeichenprägung in dem Filtereinsatz verursachen, wobei die Elastizität des Oberflächenbereichs 16 jedoch verhindert, dass die beiden Lagen des Filtereinsatzes durch die geprägte Kennzeichnung miteinander verbunden werden.

### Bezugszeichenliste:

- A: Falzen
- B: Verbinden
- C: Kennzeichnen
- D: Trennen

- 1.: Filtereinsatz
- 2.: Filterpapierbahn
- 3.: Doppellage
- 4.: Prägenaht
- 4a.: Erhebungen zum Prägen der Prägenähte
- 4b.: Erhebungen und Rücksprünge zum Prägen der Prägenähte
- 5.: Kennzeichnung
- 5a.: Erhebungen zum Prägen der Kennzeichnung
- 6.: Prägewalze für Prägenaht
- 6a.: Prägewalzenpaar für Prägenaht
- 7.: Prägewalze für Kennzeichnung
- 7a.: Prägewalzenpaar für Kennzeichnung
- 8.: Schneidewalze
- 8a.: Schneidewalzenpaar
- 9.: Falzdreieck
- 10.: Umlenkrolle
- 11.: Raffrolle
- 11a.: Raffrollenpaar
- 12.: Abfallrest
- 13.: zweite Umlenkrolle
- 14.: Patrizenwalze
- 15.: Matrizenwalze

## Patentansprüche

1. Verfahren zur Herstellung von Filtereinsätzen (1), insbesondere Filtereinsätze (1) zur Zubereitung eines Kaffee- oder Teefiltrats, umfassend das kontinuierliche Falzen (A) einer Filterpapierbahn (2) zu einer Doppellage (3), das partielle Verbinden (B) der Doppellage (3) zu einer Vielzahl von zusammenhängenden Filtereinsätzen (1) durch mindestens eine Prägenaht (4) und das Trennen (D) der zusammenhängenden Filtereinsätze (1) aus der Filterpapierbahn (2),
**dadurch gekennzeichnet,**
**dass** die Filtereinsätze (1) nach dem Falzen (A) mit einer Kennzeichnung (5) versehen werden, dass die Kennzeichnung (5) in den Filtereinsatz (1) eingeprägt wird, und dass die Prägung der Kennzeichnung (5) durch Matrize/Patrize-Prägung, nämlich durch eine Patrize und eine elastische Gegenplatte erzeugt ist.

2. Verfahren nach Anspruch 1, **dadurch gekennzeichnet, dass** die Kennzeichnung (5) gleichzeitig mit dem Trennen (D) der Filtereinsätze (1) aus der Filterpapierbahn (2) erfolgt oder alternativ erfolgt das Kennzeichnen (C) der Filtereinsätze (1) vor dem Trennen (D) aus der Filterpapierbahn (2).

3. Verfahren nach Anspruch 1 oder 2, **dadurch gekennzeichnet, dass** die Kennzeichnung (5) aus Schriftzeichen und/oder einem Symbol besteht, bevorzugt besteht die Kennzeichnung (5) aus einer Füllstandsmarkierung.

4. Verfahren nach einem der Ansprüche 1 oder 3, **dadurch gekennzeichnet, dass** die Prägung der Kennzeichnung (5) in beiden Lagen der Doppellage (3) erfolgt, bevorzugt ist, dass die geprägte Kennzeichnung (5) - zumindest teilweisesowohl seitenrichtig als auch spiegelverkehrt eingeprägt ist, so dass ein Teil der Kennzeichnung (5) auf jeder Seite der Filterwand bzw. der Filterwände seitenrichtig angeordnet ist.

5. Verfahren nach einem der Ansprüche 1 bis 4, **dadurch gekennzeichnet, dass** die Filterpapierbahn (2) zunächst kontinuierlich zu einer Doppellage (3) gefalzt wird, die Doppellage (3) durch Prägen - mit wenigstens einer Prägenaht (4) - partiell zu einer Vielzahl von zusammenhängenden Filtereinsätzen (1) verbunden wird, die Filtereinsätze (1) nachfolgend durch Prägen mit einer Kennzeichnung (5) versehen werden und anschließend ausgetrennt werden.

6. Verfahren nach einem der Ansprüche 1 bis 4, **dadurch gekennzeichnet, dass** die Filterpapierbahn (2) zunächst kontinuierlich zu einer Doppellage (3) gefalzt wird, Filtereinsätze (1) durch Prägen mit einer Kennzeichnung (5) versehen werden, die Doppellage (3) nachfolgend durch Prägen - mit wenigstens einer Prägenaht (4) - partiell zu einer Vielzahl von zusammenhängenden Filtereinsätzen (1) verbunden wird und die Filtereinsätze (1) anschließend aus der Doppellage (3) ausgetrennt werden.

7. Verfahren nach einem der Ansprüche 1 bis 6, **dadurch gekennzeichnet, dass** die Prägung der Prägenähte (4) und/oder der Kennzeichnung (5) jeweils mittels einer Prägewalze (6,7) erfolgt, bevorzugt jeweils mit einem Prägewalzenpaar (6a,7a).

8. Verfahren nach einem der Ansprüche 1 bis 7, **dadurch gekennzeichnet, dass** das Trennen (D) der Filtereinsätze (1) aus der Filterpapierbahn (2) mit einer Schneidewalze (8) erfolgt, bevorzugt mit einem Schneidewalzenpaar (8a).

9. Verfahren nach einem der Ansprüche 1 bis 8, **dadurch gekennzeichnet, dass** das Falzen (A) zu einer Doppellage (3) durch ein Führen der Filterpapierbahn (2) über ein Falzdreieck (9) erfolgt.

10. Verfahren nach einem der Ansprüche 1 bis 9, **dadurch gekennzeichnet, dass** die Filterpapierbahn (2) nach dem Falzen (A) von mindestens einer Raffrolle (11) oder mindestens einer Raffstange geführt wird, insbesondere mittels einer Umlenkrolle (10) umgelenkt wird, bevorzugt sind die Raffrolle (11) oder die Raffstange paarweise vorgesehen.

11. Verfahren nach einem der Ansprüche 1 bis 10, **dadurch gekennzeichnet, dass** die Matrize und/oder die Patrize in Form einer Walze realisiert sind/ist, insbesondere die Matrizenwalze im Oberflächenbereich aus einem elastischen Material besteht, insbesondere Silikon-Gummi oder Natur-Gummi, bevorzugt aus Holz, wobei besonders bevorzugt der elastische Bereich nur über einen Oberflächenbereich (16) der Matrizenwalze (15) erstreckt ist.

12. Vorrichtung zum Herstellen von Filtereinsätzen (1), mit einer Falzvorrichtung, einem Prägewalzenpaar und einem Schneidewalzenpaar (8a),
**dadurch gekennzeichnet,**
**dass** das Prägewalzenpaar eine Matrize/Patrize-Kombination für eine verbindende Prägenaht (4) und eine Patrize/elastische Gegenplatte-Kombination für eine Kennzeichnung (C) aufweist, und dass mit dem Prägewalzenpaar eine verbindende Prägenaht und eine unverbindende Kennzeichnung prägbar ist.

13. Matrizenwalze (15),
**dadurch gekennzeichnet,**
**dass** sie einen elastischen Oberflächenbereich (16) zum Prägen einer Kennzeichnung (5) und einen starren Oberflächenbereich mit Erhebungen und/oder Rücksprüngen (4b) zum Prägen von Prägenähten (4) aufweist.

## Claims

1. Method for producing filter inserts (1), in particular filter inserts (1) for preparing a coffee or tea filtrate, including the continuous folding (A) of a filter paper sheet (2) into a double layer (3), partially binding (B) the double layer (3) to a plurality of interconnected filter inserts (1) using at least one embossed seam (4) and separating (D) the interconnected filter inserts (1) from the filter paper sheet (2),
**characterized in**
**that** after folding (A), the filter inserts (1) are provided with a label (5), that the label (5) is embossed in the filter insert (1), that the embossing of the label (5) is created by female die/male die embossing, namely that the embossing of the label occurs using a male die and an elastic counter plate.

2. Method according to claim 1, **characterized in that** the labeling (5) of the filter insert (1) occurs simultaneously with the separation (D) of the filter insert (1) from the filter paper sheet (2) or alternatively, the labeling (C) of the filter insert (1) takes place before the separation (D) from the filter paper sheet (2).

3. Method according to claim 1 or 2, **characterized in that** the label (5) consists of characters and/or a symbol, preferably the label (5) consists of a fill level indicator.

4. Method according to any one of claims 1 or 3, **characterized in that** the embossing of the label (5) reaches both layers of the double layer (3), it is preferred that the embossed label (5) is - at least partially - stamped true sided as well as mirror-imaged, so that a part of the label (5) is arranged true sided on each side of the filter wall or filter walls.

5. Method according to any one of claims 1 to 4, **characterized in that** the filter paper sheet (2) is initially continuously folded into a double layer (3), the double layer (3) is bound together by embossing - with at least one embossed seam (4) - partially into a plurality of interconnected filter inserts (1), the filter inserts (1) subsequently are provided with a label (5) by embossing and then separated.

6. Method according to any one of claims 1 to 4, **characterized in that** the filter paper sheet (2) is initially continuously folded into a double layer (3), filter inserts (1) are provided with a label (5) by embossing, the double layer (3) is subsequently bound together by embossing - with at least one embossed seam (4) - partially into a plurality of interconnected filter inserts (1) and the filter inserts (1) are then separated from the double layer (3).

7. Method according to any one of claims 1 to 6, **characterized in that** the embossing of the embossed seam (4) and/or the label (5) occur respectively by means of an embossing roller (6, 7), preferably respectively with a pair of embossing rollers (6a, 7a).

8. Method according to any one of claims 1 to 7, **characterized in that** the separating (D) of the filter inserts (1) from the filter paper sheet (2) occurs with a cutting roller (8), preferably with a pair of cutting rollers (8a).

9. Method according to any one of claims 1 to 8, **characterized in that** the folding (A) into a double layer (3) occurs by leading the filter paper sheet (2) over a folding triangle (9).

10. Method according to any one of claims 1 to 10, **characterized in that** the filter paper sheet (2) is led by at least one converging roller (11) or at least one converging rod after folding (A), in particular is turned by means of a deflection roller (10), preferably, the converging roller (11) or the converging rod is provided in pairs.

11. Method according to any one of claims 1 to 10, **characterized in that** the female die and/or male die is/are implemented in the form of a roller, in particular the female die roller consists of an elastic material in the surface section, in particular silicon rubber or natural rubber, preferably wood, wherein the elastic section is particularly preferred to extend only over a surface section (16) of the punch roller (15).

12. Device for producing filter inserts (1) having a folding device, a pair of embossing rollers and a pair of cutting rollers (8a),
**characterized in**
**that** the pair of embossing rollers has a female die/male die combination for a binding embossed seam (4) and a male die/elastic counter plate combination for the labeling (C) and that a binding embossed seam and a non-binding label can be embossed with the pair of embossing rollers.

13. Female die roller (15)
**characterized in**
**that** it has an elastic surface section (16) for embossing a label (5) and a rigid surface section with projections and/or recesses (4b) for embossing embossed seams (4).

## Revendications

1. Procédé destiné à la fabrication d'éléments filtrants (1), en particulier d'éléments filtrants (1) pour la préparation d'un filtrat de café ou de thé, comprenant le pliage (A) en continu d'une bande de papier filtre (2) pour former une double couche (3), la liaison partielle (B) de la double couche (3) pour former, au moyen d'au moins un joint gaufré (4), une pluralité d'éléments filtrants (1) d'un seul tenant et la séparation (D) des éléments filtrants (1) d'un seul tenant de la bande de papier filtre (2),
**caractérisé en ce que**
les éléments filtrants (1) sont pourvus, après le pliage (A), d'un marquage (5), **en ce que** le marquage (5) est gaufré dans l'élément filtrant (1) et **en ce que** le gaufrage du marquage (5) est produit par un gaufrage matrice/poinçon, à savoir par un poinçon et une contre-plaque élastique.

2. Procédé selon la revendication 1, **caractérisé en ce que** le marquage (5) s'effectue simultanément à la séparation (D) des éléments filtrants (1) de la bande de papier filtre (2) ou, en variante, le marquage (C) des éléments filtrants (1) s'effectue avant la séparation (D) de la bande de papier filtre (2).

3. Procédé selon la revendication 1 ou 2, **caractérisé en ce que** le marquage (5) est constitué de caractères et/ou d'un symbole, de préférence le marquage (5) est constitué d'un marquage de niveau de remplissage.

4. Procédé selon l'une quelconque des revendications 1 ou 3, **caractérisé en ce que** le gaufrage du marquage (5) s'effectue dans les deux couches de la double couche (3), de préférence **en ce que** le marquage gaufré (5) est gaufré - au moins partiellement - non seulement à l'endroit mais aussi à l'envers, de telle sorte qu'une partie du marquage (5) soit disposée à l'endroit de chaque côté de la paroi de filtre ou des parois de filtre.

5. Procédé selon l'une quelconque des revendications 1 à 4, **caractérisé en ce que** la bande de papier filtre (2) est tout d'abord pliée en continu pour former une double couche (3), la double couche (3) est reliée partiellement par gaufrage - à l'aide d'au moins un joint gaufré (4) - pour former une pluralité d'éléments filtrants (1) d'un seul tenant, les éléments filtrants (1) sont ensuite pourvus d'un marquage (5) par gaufrage puis séparés.

6. Procédé selon l'une quelconque des revendications 1 à 4, **caractérisé en ce que** la bande de papier filtre (2) est tout d'abord pliée en continu pour former une double couche (3), les éléments filtrants (1) sont pourvus d'un marquage (5) par gaufrage, la double couche (3) est ensuite reliée partiellement par gaufrage - à l'aide d'au moins un joint gaufré (4) - pour former une pluralité d'éléments filtrants (1) d'un seul tenant, puis les éléments filtrants (1) sont séparés de la double couche (3).

7. Procédé selon l'une quelconque des revendications 1 à 6, **caractérisé en ce que** le gaufrage des joints gaufrés (4) et/ou du marquage (5) s'effectue respectivement au moyen d'un cylindre de gaufrage (6, 7), de préférence respectivement à l'aide d'une paire de cylindres de gaufrage (6a, 7a) .

8. Procédé selon l'une quelconque des revendications 1 à 7, **caractérisé en ce que** la séparation (D) des éléments filtrants (1) de la bande de papier filtre (2) s'effectue à l'aide d'un cylindre de coupe (8), de préférence à l'aide d'une paire de cylindres de coupe (8a).

9. Procédé selon l'une quelconque des revendications 1 à 8, **caractérisé en ce que** le pliage (A) pour former une double couche (3) s'effectue au moyen d'un guidage de la bande de papier filtre (2) sur un triangle de pliage (9).

10. Procédé selon l'une quelconque des revendications 1 à 9, **caractérisé en ce que** la bande de papier filtre (2) est, après le pliage (A), guidée par au moins un rouleau de plissage (11) ou au moins une barre de plissage, en particulier déviée au moyen d'un rouleau de déviation (10), le rouleau de plissage (11) ou la barre de plissage étant de préférence prévus par paires.

11. Procédé selon l'une quelconque des revendications 1 à 10, **caractérisé en ce que** la matrice et/ou le poinçon est/sont réalisé(e)(s) sous la forme d'un cylindre, en particulier le cylindre matrice est constitué, dans la région de surface, d'un matériau élastique, en particulier de caoutchouc de silicone ou de caoutchouc naturel, de préférence de bois, la région élastique s'étendant de manière particulièrement préférée uniquement sur une région de surface (16) du cylindre matrice (15).

12. Dispositif destiné à la fabrication d'éléments filtrants (1), comprenant un dispositif de pliage, une paire de cylindres de gaufrage et une paire de cylindres de coupe (8a),
**caractérisé en ce que**
la paire de cylindres de gaufrage comprend une combinaison matrice/poinçon pour un joint gaufré (4) de liaison et une combinaison poinçon/contre-plaque élastique pour un marquage (C), et **en ce qu'**un joint gaufré de liaison et un marquage n'assurant pas de liaison peuvent être gaufrés à l'aide de la paire de cylindres de gaufrage.

13. Cylindre matrice (15),
**caractérisé en ce**
**qu'**il comprend une région de surface élastique (16) pour le gaufrage d'un marquage (5) et une région de surface rigide pourvue de rehaussements et/ou de renfoncements (4b) pour le gaufrage de joints gaufrés (4).
